# EUROPEAN PATENT APPLICATION

(11) **EP 1 318 466 A2**
(43) Date of publication of application: **11.06.2003**
(21) Application number: 02256565.9
(22) Date of filing: 20.09.2002
(51) Int. Cl.: G06F 17/30

(54) **Apparatus for interpreting electronic legal documents**

(30) Priority: 21.09.2001 GB 0122874
(71) Applicant: Hewlett Packard Company, a Delaware Corporation, Palo Alto, CA 94304 (US)
(72) Inventor: Salle, Mathias Jean Rene, Clifton, Bristol BS8 3HL (GB); Baldwin, Adrian, Downend, Bristol BS16 6LQ (GB); Wills, Richard, Stoke Gifford, Bristol BS34 8XU (GB)
(74) Representative: Lawrence, Richard Anthony

(57) **Abstract**

The invention provides electronic document interpretation apparatus for providing explanatory text to assist in the interpretation of an electronic formal legal document (1) with narrative language text, said apparatus comprising a database of explanatory and/or commentary text (22) in records associated with textual elements (2) of the said document, and processing means (30) operable to allow a user to read and/or write selected ones of said records whilst reading or writing the legal document. Also provided is an electronic formal legal document (1) comprising a textual element (2) and a tag (2a) associated with the said textual element, the said tag providing a link to reproducible explanatory or commentary text (22) relating to the said textual element (2).

## Description

This invention relates to apparatus for interpreting electronic legal documents.

### BACKGROUND TO THE INVENTION

Presently, 80% of business-to-business interactions are contract based. Of this 80% of contract-based interactions, approximately 1% are executed via the Internet, 10% through electronic data interchange (EDI), and 89% in a traditional manner using paper. There is motivation and a desire to increase the number of electronic contracts in use, increasing the proportion of electronic contracts into the remaining 90% of the market.

Electronic contracts, or 'e-contracts', state the terms and conditions of a legally-binding agreement between two parties, and may be both prepared and executed electronically. Contracts (including e-contracts) state the parties' mutual rights and obligations.

Understanding the terms of such a contract, or any other formal legal document, can be difficult due to the legalistic language that is often used, especially given many readers' lack of legal knowledge. There is therefore often a need for assistance in interpreting the content of legal documents. Such assistance is highly desired by people and organisations who need to understand the implications of the terms and clauses of a contract to which they are about to commit themselves, or even have already committed themselves. Those who are bound by a contract may require assistance explaining the extent to which clauses may be enforced in a given jurisdiction. Assistance is also often desired by those whose work involves the drafting and preparation of contracts and other legal documents, in order to verify their understanding of the terms and clauses being used, and to provide explanations or reminders where necessary.

As contracts are drafted, used, enforced and interpreted, users develop opinions as to which terms are effective and should therefore be used again in the future, and which terms are less effective and should therefore be avoided. Accordingly there is a need for a means by which to aid users in assembling opinions on legalistic terms.

It is a general object of the present invention to provide apparatus, for use with electronic contracts and other legal documents in electronic form, to address the shortcomings identified above.

### SUMMARY OF THE INVENTION

According to a first aspect of the invention there is provided electronic document interpretation apparatus for providing explanatory text to assist in the interpretation of an electronic formal legal document with narrative language text, said apparatus comprising a database of explanatory and/or commentary text in records associated with textual elements of the said document, and processing means operable to allow a user to read and/or write selected ones of said records whilst reading or writing the legal document. This advantageously enables users to obtain explanations as to the meanings of terms and clauses in the electronic formal legal document, and also provides assistance to those employed in drafting legal documents. A further advantage is that the legal document need not be prepared with tags or explanatory text. Instead, the explanatory text may be obtained from (or written to) a separate database, the explanatory text being directly associated with the text of the legal document.

Preferably the database is separate from the said electronic document. This provides the advantage that the explanatory text is independent of the electronic document itself. As a consequence of being independent of the electronic document, the explanatory text may be less biased than may be the case were the explanatory text provided with the electronic document. This is because explanatory text provided with the electronic document may well be written by the author of the document itself, whereas explanatory text independent of the electronic document may be provided by a third party that does not have an interest in the content of the document.

Preferably the database is remote from the said processing means.

Preferably the said processing means are operable to communicate with the database via a data communications network. Such a data communications network may be a local area network, a wide area network, or the Internet.

Preferably the apparatus further comprises a correlation processor for matching words or phrases of the text which is read or proposed to be written with standard legal text in a database, and for selecting and reading or writing to or from the database appropriate commentary or explanatory text associated with the most closely matching standard legal text. The correlation processor advantageously enables explanatory text to be retrieved from (or stored in) the database on the condition that the text being used in the legal document matches (or is closely similar to) the standard legal text stored in the database.

Preferably the correlation processor is remote from the said processing means.

Advantageously, by having the correlation processor and/or the database remote from the processing means, the correlation processor and/or the database may be operated by a third party independent of the parties bound, or to be bound, by the legal document in question. The third party may also provide a service that may be widely utilised - e.g. across the Internet.

Preferably the said processing means are operable to communicate with the correlation processor via a data communications network.

Preferably the processing means further comprise an expert system which learns explanatory text associated with the legal text as the use of the apparatus progresses.

Preferably the apparatus further comprises a user interface by which a user can provide feedback as to the usefulness of explanatory text provided, the apparatus being responsive to the said feedback when selecting explanatory text to be provided to users at a future time. This advantageously results in the explanations that are provided to users being of optimal usefulness and comprehensibility.

In respect to any of the above, preferably the apparatus further comprises a user interface for receiving a set of user preferences from a user, and wherein the explanatory text includes accompanying contextual tags representative of the context in which the explanatory text applies, the processing means being responsive to the contextual tags and user preferences to select explanatory text to be read or written in accordance with the said set of user preferences. This advantageously enables explanatory text to be provided that is tailored to suit the user.

Preferably the said contextual tags relate to at least one of: language, legal jurisdiction, legal knowledge level, contract value. Accordingly, in specifying the set of user preferences the user would be required to specify their language, the legal jurisdiction in which the legal document is to be in effect, and their own level of legal understanding and knowledge. The value of the contract may be obtained from elsewhere in the text of the contract itself. In accordance with the user preferences, by means of the contextual tags the explanatory text that is reproduced will correspond to the user's specified preferences.

According to a second aspect of the invention there is provided an electronic formal legal document comprising a textual element and a tag associated with the said textual element, the said tag providing a link to reproducible explanatory or commentary text relating to the said textual element.

Preferably the tag is in extensible markup language (XML).

Preferably the electronic formal legal document is contained within a digital data file, the said digital data file also containing the said explanatory or commentary text.

Alternatively, preferably the said explanatory or commentary text is held in, and reproduced from, a data storage device remote from the said document. The data storage means may be a data carrier or a database, which may be connected to or integral with a server on a data communications network.

Particularly preferably the explanatory or commentary text comprises at least one contextual tag specifying the context of the explanatory or commentary text, thereby enabling the explanatory or commentary text to be reproduced in correspondence with a user's preference profile.

Preferably the at least one contextual tag specifies at least one of: language, legal jurisdiction, legal knowledge level, contract value. Such tags advantageously enable an appropriate explanation or comment to be reproduced for the user that is appropriate to the user's circumstances (e.g. the language spoken, the local jurisdiction, the user's legal knowledge level) and is also appropriate to the value of the contract.

### BRIEF DESCRIPTION OF THE DRAWINGS

Embodiments of the invention will now be described, by way of example, and with reference to the drawings in which:
Figure 1 is a schematic illustration of a plurality of formal legal documents having textual elements with associated tags;
Figure 2 illustrates apparatus arranged and configured to provide a user with explanatory and/or commentary text relating to user-selected textual elements of a legal document; and
Figure 3 illustrates a possible configuration of aspects of processor-controlled apparatus in accordance with the present invention.

### DETAILED DESCRIPTION OF PREFERRED EMBODIMENTS

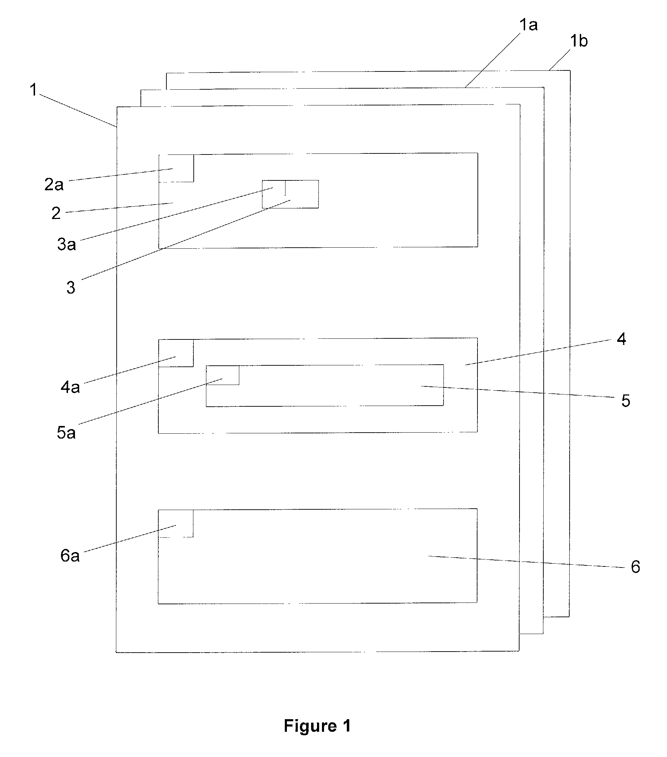

Figure 1 illustrates a plurality of electronic legal documents 1, 1a, 1b. Document 1 comprises a number of textual elements 2, 3, 4, 5, 6. In this example, the first element 2 is a paragraph of text, element 3 represents a word or short phrase in the said paragraph (element 2), element 4 is another paragraph of text, and within this paragraph element 5 represents a sentence. Textual element 6 represents yet another paragraph. Tags may refer to a single word, expression or clause, or a combination of clauses. Indeed, an entire legal document may only have a single tag associated with it.

Each of the above-mentioned textual elements 2, 3, 4, 5, 6 has associated with it a corresponding tag 2a, 3a, 4a, 5a, 6a. The presence of these tags may be indicated in the electronic representation of the legal document, for example, as small icons, or as underlined or coloured text in a similar fashion to hypertext links. Alternatively the tags themselves may be hidden from view. The tags are small elements of code, written in an appropriate language such as XML (extensible markup language), and serve to link the textual element to a corresponding piece of explanatory text. In the case of a paragraph (e.g. 2, 4 or 6 of Figure 1) the explanatory text will provide an explanation as to the meaning and legal significance of the text of that paragraph. For small elements such as the word 3 or the sentence 5, the explanatory text again provides a definition or explanation as appropriate. As well as providing explanatory text by way of the tagging system, other users' comments and opinions relating to the effectiveness of specific clauses, or the usefulness of explanations provided, may also be obtained via tags, and such commentary text will be discussed in greater detail later.

The explanatory or commentary text relating to each tagged textual element may be stored in a tag file integral with or accompanying the electronic legal document itself. Whilst this has the advantage that the explanations may be provided by the original author or draftsperson of the legal document, it has a potential disadvantage in that the explanatory text may be biased in the favour of the party that prepared the document.

In an alternative embodiment, the explanatory text may be stored on a remote database, and may be prepared by a third party independent from the parties bound by the legal document in question. This potentially results in the explanatory text being less biased than may be the case were it prepared by the contract draftsperson themselves, and also provides an means by which other user's opinions and comments on certain terms and expressions may be collected. Such commentary and opinions are reproduced before the user in a similar manner to explanatory text.

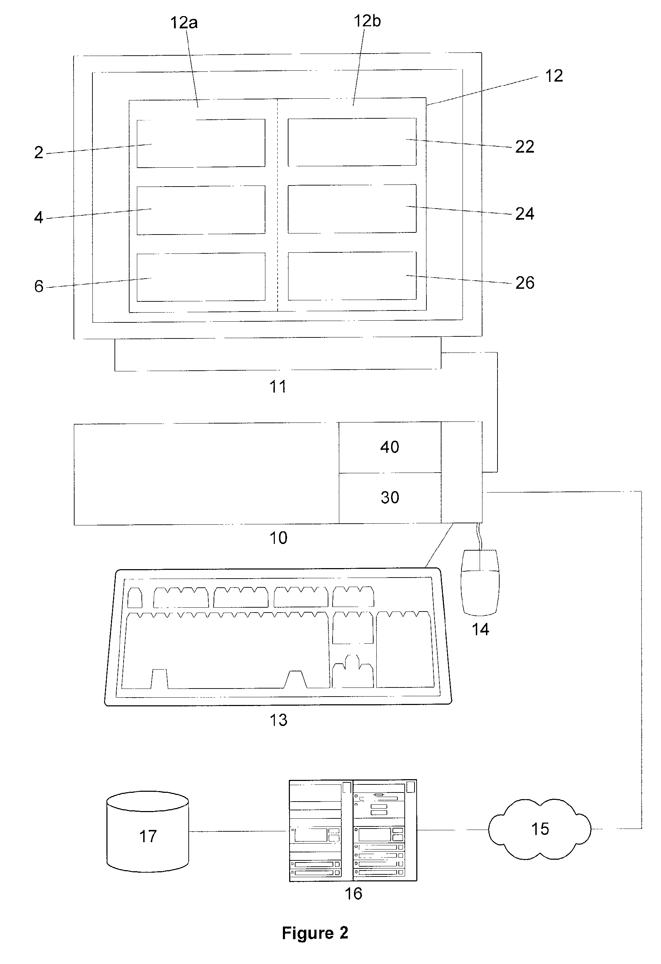

Figure 2 illustrates apparatus suitable for retrieving and viewing the explanatory or commentary text that accompanies each tagged textual element. The apparatus comprises a conventional personal computer 10, such as an IBM (RTM)-compatible computer or an Apple (RTM) Macintosh (RTM) computer. It will be appreciated that other computer platforms would also be appropriate. User input means are provided by way of a keyboard 13 and a mouse 14, both of which are electrically coupled to the computer 10. Also attached to the computer 10 is a visual display unit 11 on which the output 12 from the computer 10 is displayed. Internally, the computer 10 comprises a processor 30 and memory 40.

The output 12 displayed on the visual display unit 11 may be arranged to display simultaneously the content of the electronic legal document, together with the explanatory text relating to elements of the contract as selected by a user. One possible configuration of the visual display is as shown in Figure 2, in which the screen output 12 is subdivided into two sections 12a, 12b. The electronic legal document is shown in the left hand section 12a, and here paragraphs 2, 4 and 6 are visible. In the right hand section 12b of the display the corresponding explanatory text is displayed. Here, explanatory texts 22, 24, 26 are shown that relate respectively to the textual elements 2, 4 and 6.

Other means by which the explanatory text may be recalled in respect of a textual element would include a pop-up box or window containing the explanatory text. Such a box may be recalled by the user clicking on a designated textual element, a corresponding logo, or a hypertext link. Alternatively, explanatory text may be recalled by the user simply lingering the mouse pointer over a tagged textual element. Other suitable means by which explanatory text may be recalled in respect of a tagged textual element will be appreciated by those skilled in the art.

Explanatory text may also be associated with specific textual elements of an electronic legal document by reference to line number or paragraph number. However, it will be appreciated that, for ease of use, the incorporation of tags in the body of the legal document that directly link to the explanatory text is currently a preferred method by which this embodiment of the apparatus is operated.

As mentioned above, the explanatory text may be incorporated as coding in the digital data file containing the electronic legal document. Alternatively, the explanatory text may be held on a local server or file store, or accessed via a digital communications network such as a local area network, a wide area network, or the Internet 15. In embodiments in which the explanatory text is held remote from the legal document, it is envisaged (although it is by no means essential) that the explanatory text would be provided by a third party separate from the parties bound by the legal document in question. In some instances, such explanatory text written by third parties (e.g. legal experts) may be referred to by users who have read explanations provided with a legal document but which the reader does not trust or understand. Explanatory text separate from the legal document itself is also likely to be more widely applicable and pitched at a more general level, since it is envisaged that the explanations would be recalled by different users to provide assistance in respect of different legal documents. The explanatory text may be held in a database 17 accessible by (or integral with) a webserver 16, or in any other kind of networked database.

Links to relevant legal case law databases may also be provided from the electronic legal document or from an item of explanatory text. In this manner, the user may recall a court decision or report explaining how a certain clause has been interpreted in court, which usefully supplements the explanatory text described above.

It will be appreciated that the content of the explanatory text required by a user will depend on a number of factors relating to the user and the context of the legal document. For example, a user with only a basic (or even non-existent) level of legal knowledge will require a different level of explanatory text to a legal specialist. The language spoken by the user will determine the language in which the explanation is required. Importantly, the legal significance of a particular clause, word or expression may vary depending on the country or legal jurisdiction in which it is to be enforced. Different explanations may therefore be provided in different languages, aimed at users having different levels of legal knowledge, and addressing the law of different countries.

So that the apparatus may reproduce appropriate explanatory text for the user's circumstances, the user is preferably required to supply preference information to the apparatus, stating their level of legal knowledge, their language and the legal jurisdiction in question.

The value of the legal document (particularly in the case of contracts) may also be taken into account by the apparatus when selecting explanatory text for reproduction. For example, if the contract is worth a large sum of money (e.g. millions of pounds), then fuller explanations may be provided than if the contract is just in respect of a few hundred pounds. The value of the contract may be automatically extracted from the text of the electronic document, or it may be provided by way of a tag accompanying the document. Alternatively the value of the contract may be supplied by the user along with their preference information.

To achieve such contextual customisation of the explanations provided to the user, explanatory text is tagged with the context to which it applies. The XML tagging language may again be used, which allows reference to context profiles in the form of attribute and value expressions. For example, an explanatory comment provided in English, suitable for a legal novice, with relevance to the United States legal system, and appropriate to a high value contract, might have the following XML tags:
<language> English </language>
<level> Novice </level>
<jurisdiction> US </jurisdiction>
<value> high </value>

The explanatory comment having the above tags would thereby be reproduced for a user who has identified himself in his preference profile as being English speaking, a legal novice, and operating within the jurisdiction of the US. Since the 'value' tag has been identified as being 'high', the explanatory text will be recalled in respect of a contract that is also identified as being of high value. The explanations may also include references to other databases and clause identifiers.

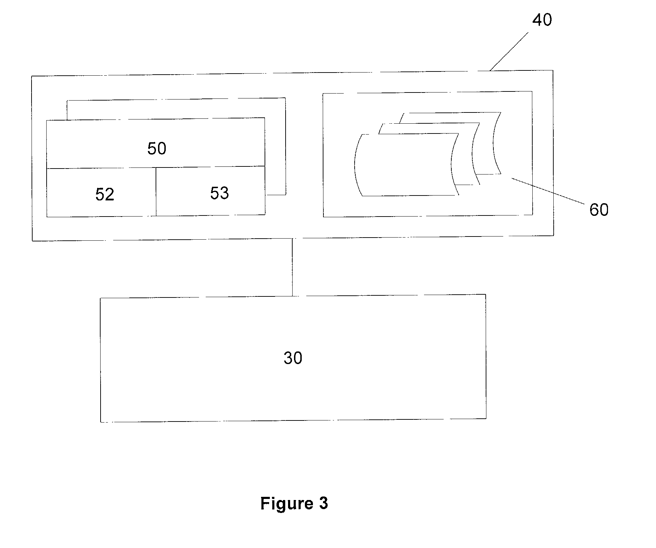

As shown in Figure 3, the memory 40 of the personal computer is used to hold the content 50 of the electronic legal document itself, the tags in the document 52, and the user's preference information 53. The appropriate explanatory data 60 may also be stored in the memory 40. As discussed above, in some instances the explanatory data 60 may be supplied with the electronic document content 50, whilst in other cases it would be obtained separately - e.g. by downloading from the database 15 via the webserver 16 over the Internet. In the instances in which the explanations are downloaded from elsewhere, all the explanatory data 60 relating to the contract in question may be obtained in a bulk download, in response to the all the tags 52 provided in the legal document, and in accordance with the user's preference profile. This has the advantage that all the possible explanatory text is then present in the memory of the user's computer and is ready for them to read (whether they wish to consult it or not). Alternatively specific pieces of explanatory text may be downloaded as and when they are required.

As well as explanatory text, remote databases (especially Internet-based ones) may also be used to assemble and manage commentary text provided by other users giving their experience of the effectiveness of certain legal clauses, phrases or expressions, or to rate or comment on the pre-existing explanations provided by the apparatus. In terms of the pre-existing explanations, the feedback from a user may be simply be to rate it (e.g. on a scale of 1 to 10) in terms of value, usefulness and ease of comprehension. Alternatively, they may add a comment, such as "I found this explanation very helpful". Furthermore, and arguably more usefully, contract users may add their own explanations of legalistic terms, or comments stating their own problems or experiences in respect of a particular clause or expression. User-provided commentary may be stored using XML tags accompanying the pre-existing explanatory text. It will be appreciated that, although users would be invited to supply their comments and ratings, the comments may be subjected to moderation by managers or reviewers of the database.

When the explanation database is consulted by a user for an explanation of a given term, a weighting algorithm may be employed to select a pre-existing explanation from a number of possible alternatives. Such an algorithm may take into account the number of times each explanation has been used (which is an indication of its usefulness and comprehensibility) and ratings given by users. Then, once the user has read the explanation, he may be asked to rate its usefulness, and this feedback may be further taken into account by the apparatus when selecting explanations to provide to users in the future.

The on-screen interface presented to the user includes means by which the user may search, access, read from, or write to the database of user comments. Such means may include a series of icons or on-screen representations selectable by the user using the keyboard 13 or mouse 14.

In cases in which the electronic legal document is not provided with tags, it is nevertheless advantageous to still be able to use the apparatus described above and to take advantage of the assistance it may be able to offer. Such assistance is also desired by those involved in drafting a contract who wish to verify the meaning of terms that are proposed to be used. The above embodiments of the invention rely at least to some extent on the provision of tags in the document. However, it will be appreciated that many legal documents use reasonably common standardised clauses. For use in these instances in which standardised clauses are used, the database 17 may include a text matching agent or correlation processor operable to match clauses, words or expressions from the legal document to identical, or similar, clauses, words or expressions held in the database. Explanatory text corresponding to the matched textual elements is then reproduced for the user, and options may be provided for the user to add comments, read others' comments, or to rate the usefulness of the explanation provided, as discussed above.

Such a text matching agent may use template rules, comparing the overall structure of the document with the structure of known documents held in the database. Alternatively, or in addition to the use of template rules, the text matching agent may perform a grammatical or semantic analysis of the textual elements of the document. A dictionary of important legal terms may also be employed by the text matching agent, whereby the matching agent first identifies any of these terms in the document and then matches them with the corresponding content in the database of explanatory text.

A piece of explanatory text is displayed in accordance with the text that is analysed and matched. Where no guaranteed match is found, a plurality of possible explanations may be given, each with an indication of the likelihood of the match being correct (e.g. as a percentage, with 100% representing a certain match, and lower percentages providing an indication of the confidence the user may place in the match and the accompanying explanation provided).

Where a sentence analysis has been performed, the apparatus may attempt to extract nouns, quantities, dates, etc. from the text of the contract and incorporate these into the explanation text reproduced to assist the user. In such instances explanation templates would be used, containing variables where quantities are referred to. Values for these variables would be evaluated based on the corresponding values extracted from the electronic document itself, and inserted into the explanation presented to the user.

## Claims

1. Electronic document interpretation apparatus for providing explanatory text to assist in the interpretation of an electronic formal legal document (1) with narrative language text, said apparatus comprising a database of explanatory and/or commentary text (22) in records associated with textual elements (2) of the said document, and processing means (30) operable to allow a user to read and/or write selected ones of said records whilst reading or writing the legal document.

2. Apparatus as claimed in Claim 1, wherein the database is separate from the said electronic document (1).

3. Apparatus as claimed in Claim 1 or Claim 2, wherein the database (17) is remote from the said processing means (30).

4. Apparatus as claimed in Claim 3, wherein the said processing means (30) are operable to communicate with the database (17) via a data communications network (15)

5. Apparatus as claimed in any preceding Claim further comprising a correlation processor for matching words or phrases of the text which is read or proposed to be written with standard legal text in a database, and for selecting and reading or writing to or from the database appropriate commentary or explanatory text associated with the most closely matching standard legal text.

6. Apparatus as claimed in Claim 5, wherein the correlation processor is remote from the said processing means (30).

7. Apparatus as claimed in Claim 6, wherein the said processing means (30) are operable to communicate with the correlation processor via a data communications network.

8. Apparatus as claimed in any preceding Claim, wherein the processing means (30) further comprise an expert system which learns explanatory text associated with the legal text as the use of the apparatus progresses.

9. Apparatus as claimed in any preceding Claim further comprising a user interface (13, 14) by which a user can provide feedback as to the usefulness of explanatory text provided, the apparatus being responsive to the said feedback when selecting explanatory text to be provided to users at a future time.

10. Apparatus as claimed in any preceding Claim further comprising a user interface (13, 14) for receiving a set of user preferences from a user, and wherein the explanatory text includes accompanying contextual tags representative of the context in which the explanatory text applies, the processing means (30) being responsive to the contextual tags and user preferences to select explanatory text to be read or written in accordance with the said set of user preferences.

11. Apparatus as claimed in Claim 10, wherein the said contextual tags relate to at least one of: language, legal jurisdiction, legal knowledge level, contract value.

12. An electronic formal legal document (1) comprising a textual element (2) and a tag (2a) associated with the said textual element, the said tag (2a) providing a link to reproducible explanatory or commentary text (22) relating to the said textual element (2).

13. An electronic formal legal document as claimed in Claim 12 wherein the tag (2) is in extensible markup language.

14. An electronic formal legal document as claimed in Claim 12 or Claim 13 further being contained within a digital data file, the said digital data file also containing the said explanatory or commentary text (22).

15. An electronic formal legal document as claimed in Claim 12 or Claim 13, wherein the said explanatory or commentary text (22) is held in, and reproduced from, a data storage device (17) remote from the said document (1).

16. An electronic formal legal document as claimed in any of Claims 12 to 15, wherein the explanatory or commentary text (22) comprises at least one contextual tag specifying the context of the explanatory or commentary text, thereby enabling the explanatory or commentary text to be reproduced in correspondence with a user's preference profile.

17. An electronic formal legal document as claimed in Claim 16, wherein the at least one contextual tag specifies at least one of: language, legal jurisdiction, legal knowledge level, contract value.
